(19) Europäisches Patentamt
European Patent Office
Office européen des brevets

(11) **EP 1 568 577 A2**

(12) **EUROPÄISCHE PATENTANMELDUNG**

(43) Veröffentlichungstag:
**31.08.2005 Patentblatt 2005/35**

(51) Int Cl.[7]: **B62D 6/00**

(21) Anmeldenummer: **05001777.1**

(22) Anmeldetag: **28.01.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **28.02.2004 DE 102004009816**

(71) Anmelder: **ZF Lenksysteme GmbH**
**73527 Schwäbisch Gmünd (DE)**

(72) Erfinder:
• **Reimann, Gerd**
  **74232 Abstatt (DE)**
• **Schuster, Wolfgang**
  **73453 Abstgmünd (DE)**
• **Klier, Willy**
  **73527 Schwäbisch Gmünd (DE)**

(54) **Lenksystem für ein Kraftfahrzeug und Verfahren zum Betrieb des Lenksystems**

(57) Die Erfindung betrifft ein Lenksystem (1) eines Kraftfahrzeugs, eine Lenkhandhabe (2) zur Vorgabe eines Lenkradwinkels ($\delta\_S$) als Maß für einen gewünschten Lenkwinkel ($\delta\_F$) für mindestens ein lenkbares Rad (12, 13) des Kraftfahrzeugs umfasst. Außerdem umfasst das Lenksystem (1) Überlagerungsmittel (9) zum Generieren eines Zusatzwinkels. ($\delta\_M$) und zur Überlagerung des Lenkradwinkels ($\delta\_S$) mit dem Zusatzwinkel ($\delta\_M$). Der sich durch die Überlagerung ergebende Winkel wird als Ritzelwinkel ($\delta\_G$) bezeichnet. Das Lenksystem (1) umfasst auch ein Lenkgetriebe (4) zur Umsetzung des Ritzelwinkels ($\delta\_G$) in einen Lenkwinkel ($\delta\_F$) für das mindestens eine lenkbare Rad (12, 13) des Kraftfahrzeugs. Um die Funktionssicherheit, Zuverlässigkeit und Verfügbarkeit von derartigen Lenksystemen (1) zu verbessern, wird vorgeschlagen, dass das Lenksystem (1) Mittel (19) zur Ermittlung eines Winkelwertes von einem der Winkel ($\delta\_S$; $\delta\_M$; $\delta\_G$) aus der Gruppe Lenkradwinkel ($\delta\_S$), Zusatzwinkel ($\delta\_M$) und Ritzelwinkel ($\delta\_G$) anhand von Winkelwerten der beiden anderen Winkel ($\delta\_M$, $\delta\_G$; $\delta\_S$, $\delta\_G$; $\delta\_S$, $\delta\_M$) und unter Berücksichtigung der kinematischen Beziehung zwischen den drei Winkeln ($\delta\_S$, $\delta\_M$, $\delta\_G$) aufweist.

Fig. 1

EP 1 568 577 A2

# Beschreibung

Stand der Technik

Die vorliegende Erfindung betrifft ein Lenksystem für ein Kraftfahrzeug. Das Lenksystem umfasst eine Lenkhandhabe zur Vorgabe eines Lenkradwinkels als Maß für einen gewünschten Lenkwinkel für mindestens ein lenkbares Rad des Kraftfahrzeugs. Außerdem umfasst das Lenksystem Überlagerungsmittel zum Generieren eines Zusatzwinkels und zur Überlagerung des Lenkradwinkels mit dem Zusatzwinkel. Der sich durch die Überlagerung ergebende Winkel wird als Ritzelwinkel bezeichnet. Schließlich umfasst das Lenksystem ein Lenkgetriebe zur Umsetzung des Ritzelwinkels in einen Lenkwinkel für das mindestens eine lenkbare Rad des Kraftfahrzeugs.

Die Erfindung betrifft außerdem ein Verfahren zum Betrieb eines Lenksystems eines Kraftfahrzeugs. Dabei wird mittels einer Lenkhandhabe ein Lenkradwinkel als Maß für einen gewünschten Lenkwinkel für mindestens ein lenkbares Rad des Kraftfahrzeugs vorgegeben. Außerdem wird ein Zusatzwinkel generiert und zur Ermittlung eines Ritzelwinkels dem Lenkradwinkel überlagert. Schließlich wird der Ritzelwinkel in einen Lenkwinkel für das mindestens eine lenkbare Rad des Kraftfahrzeugs umgesetzt.

Schließlich betrifft die vorliegende Erfindung ein Computerprogramm, das auf einem Rechengerät, insbesondere auf einem Mikroprozessor, eines Steuergeräts für ein Lenksystem eines Kraftfahrzeugs ablauffähig ist.

Ein Lenksystem der eingangs genannten Art ist beispielsweise aus der DE 100 13 711 A1 bekannt. Dort ist ein Lenksystem beschrieben, das außer den genannten Merkmalen auch einen Servoantrieb zur Momentenunterstützung aufweist. Der Grad der Momentenunterstützung ist abhängig von der Fahrgeschwindigkeit des Kraftfahrzeugs. Während bei langsamer Fahrgeschwindigkeit die Momentenunterstützung größer ist (zum Beispiel um beim Rangieren des Fahrzeugs das Lenkrad ohne großen Kraftaufwand betätigen zu können), ist die Momentenunterstützung bei höheren Geschwindigkeiten (zum Beispiel um die Fahrstabilität bei einer Autobahnfahrt zu erhöhen) deutlich kleiner. Der Servoantrieb kann elektrisch oder hydraulisch arbeiten. Auch das erfindungsgemäße Lenksystem kann einen Servoantrieb aufweisen. Die Erfindung ist aber auch für solche Lenksysteme von Bedeutung, die keinen Servoantrieb aufweisen.

Als Lenkhandhabe kann beispielsweise ein Lenkrad, eine Lenkstange oder einer oder mehrere Lenkknüppel eingesetzt werden. Ein Lenksystem mit Überlagerungsmitteln ist beispielsweise aus der DE 40 31 316 Al bekannt. Mit Hilfe der Überlagerungsmittel ist es möglich, einen von der Lenkhandhabe vorgegebenen Lenkradwinkel zur Erhöhung der Fahrstabilität und/ oder des Komforts mit einem Zusatzwinkel zu überlagern, so dass sich fahrdynamikabhängig und/ oder komfortabhängig ein variable Übersetzungsverhältnis zwischen Lenkradwinkel und mittlerem Lenkwinkel der lenkbaren Räder des Kraftfahrzeugs einstellt. Dadurch ist es sicherheitstechnisch möglich, ein Kraftfahrzeug, das droht auszubrechen, durch eine entsprechende Korrektur des Lenkwinkels wieder in eine stabile Fahrsituation zurückzuführen. Die Überlagerungsmittel können andere Fahrdynamikmittel (z. B. ein elektronisches Stabilitätsprogramm (ESP), ein Antiblockiersystem (ABS), eine Antriebsschlupfregelung (ASR), etc.) unterstützen. Komforttechnisch ist es möglich, einem Lenkradwinkel beispielsweise einen geschwindigkeitsabhängigen Zusatzwinkel zu überlagern. Dadurch kann bei niedrigen Fahrzeuggeschwindigkeiten eine relativ kleines Übersetzungsverhältnis einzustellen, das heißt eine relativ geringe Drehung der Lenkhandhabe führt zu einem relativ großen Lenkwinkel der Räder. Bei hohen Fahrzeuggeschwindigkeiten kann dagegen ein relativ großes Übersetzungsverhältnis eingestellt werden, so dass sich die Fahrstabilität des Kraftfahrzeugs verbessert.

Der vorliegenden Erfindung liegt die Aufgabe zugrunde, die Funktionssicherheit, Zuverlässigkeit und Verfügbarkeit von Lenksystemen der eingangs genannten Art zu verbessern.

Zur Lösung dieser Aufgabe wird ausgehend von dem Lenksystem der eingangs genannten Art vorgeschlagen, dass das Lenksystem Mittel zur Ermittlung eines Winkelwertes von einem der Winkel aus der Gruppe Lenkradwinkel, Zusatzwinkel und Ritzelwinkel anhand von Winkelwerten der beiden anderen Winkel und unter Berücksichtigung der kinematischen Beziehung zwischen den drei Winkeln aufweist.

Vorteile der Erfindung

Erfindungsgemäß wird also vorgeschlagen, die kinematische Beziehung zwischen den drei Winkeln des Lenksystems, nämlich Lenkradwinkel, Zusatzwinkel und Ritzelwinkel, zu ermitteln. Weiter wird vorgeschlagen, anhand von zweien der drei Winkel den dritten Winkel zu ermitteln. Um eine möglichst genaue Ermittlung des dritten Winkels zu ermöglichen, wird dieser unter Berücksichtigung der kinematischen Beziehung zwischen den drei Winkeln ermittelt. Dabei geht es einerseits darum, ein möglichst genaues Modell des Lenksystems zu ermitteln, mit dessen Hilfe der dritte Winkel ermittelt werden kann. Andererseits sollte die kinematische Beziehung zwischen den drei Winkel jedoch möglichst einfach beschrieben werden, um den zur Ermittlung des dritten Winkels erforderlichen Rechenaufwand möglichst gering zu halten.

Gemäß einer vorteilhaften Weiterbildung der vorliegenden Erfindung wird vorgeschlagen, dass das Lenksystem Mittel zur Plausibilitätsprüfung des einen Winkels anhand des von den Mitteln ermittelten Winkelwerts des einen Winkels aufweist. Gemäß einer bevorzugten Ausführungsform weist das Lenksystem Mittel zum Messen der Winkelwerte der beiden anderen Winkel auf. Vorteilhafterweise weist das Lenksystem Mittel zum Modellieren der Winkelwerte der beiden anderen Winkel anhand von anderen Größen auf.

Der ermittelte Winkelwert für den dritten Winkel kann im Rahmen des Betriebs des Lenksystems als dritter Winkel herangezogen werden. Es ist aber auch denkbar, dass der erfindungsgemäß ermittelte Winkelwert für den dritten Winkel mit einem auf andere Weise (beispielsweise durch Messung) ermittelten Winkelwert für den dritten Winkel verglichen und damit die Plausibilität des Winkelwerts des dritten Winkels überprüft wird. Insbesondere ist daran gedacht, den Zusatzwinkel und den Ritzelwinkel mittels geeigneter Sensoren zu messen und den Lenkradwinkel anhand der beiden gemessenen Winkel zu überwachen. Dazu wird anhand des Zusatzwinkels und des Ritzelwinkels ein Winkelwert für den Lenkradwinkel ermittelt und dieser einer Plausibilitätsprüfung unterzogen. Ebenso ist es möglich, den Zusatzwinkel anhand der beiden anderen gemessenen Winkel zu ermitteln. Außerdem kann der Zusatzwinkel beispielsweise mittels einer geeigneten Funktion oder anhand eines geeigneten Modells ermittelt werden, wohingegen der Ritzelwinkel mittels eines Sensors gemessen wird. Der Lenkradwinkel kann anhand des modellierten Winkels und des gemessenen Winkels überwacht werden. Dazu wird anhand des Zusatzwinkels und des Ritzelwinkels ein Winkelwert für den Lenkradwinkel ermittelt und dieser einer Plausibilitätsprüfung unterzogen. Schließlich ist es auch möglich, den Ritzelwinkel mittels modellierter oder gemessener Winkelwerte für den Lenkradwinkel und den Zusatzwinkel den Ritzelwinkel zu ermitteln bzw. zu überwachen.

Gemäß einer anderen vorteilhaften Weiterbildung der vorliegenden Erfindung wird vorgeschlagen, dass die Mittel bei der Ermittlung des Winkelwertes des einen Winkels einen Kardanfehler einer zwischen der Lenkhandhabe und dem Lenkgetriebe angeordneten Gelenkwelle oder eine den Kardanfehler charakterisierende Größe berücksichtigen. Es hat sich herausgestellt, dass der Kardanfehler einen großen Einfluss auf die kinematische Beziehung der drei Winkel, nämlich Lenkradwinkel, Zusatzwinkel und Ritzelwinkel, zueinander hat. Durch die Kompensation des Kardanfehlers ergibt sich eine besonders hohe statische Genauigkeit des Lenksystems.

Gemäß einer weiteren bevorzugten Ausführungsform wird vorgeschlagen, dass das Lenksystem Mittel zur Ermittlung des Kardanfehlers anhand einer analytischen Gleichung aufweist. Die Gleichung erlaubt eine hochgenaue Berücksichtigung des Kardanfehlers bei der Ermittlung des dritten Winkels aus den beiden anderen Winkeln.

Um den Rechenaufwand zur Ermittlung des Kardanfehlers zu verringern, wird vorgeschlagen, den Kardanfehler durch eine trigonometrische Funktion zu modellieren. Insbesondere wird vorgeschlagen, dass das Lenksystem Mittel zur Modellierung des Kardanfehlers anhand einer Cosinus-Funktion aufweist.

Gemäß noch einer anderen vorteilhaften Weiterbildung der vorliegenden Erfindung wird vorgeschlagen, dass die Mittel bei der Ermittlung des Winkelwertes des einen Winkels einen von der Lenkradwinkelgeschwindigkeit oder von einer diese charakterisierenden Größe abhängigen dynamischen Fehler berücksichtigen.

Gemäß einer bevorzugten Ausführungsform der Erfindung weist das Lenksystem Mittel zur Modellierung des dynamischen Fehlers anhand einer Differentialgleichung auf.

Der Kardanfehler und der dynamische Fehler können zu einer Ausgleichsfunktion zusammengefasst werden, die bei der Ermittlung des Winkelwertes des einen Winkels berücksichtigt wird. Vorteilhafterweise berücksichtigen die Mittel bei der Ermittlung des Winkelwertes des einen Winkels eine Ausgleichsfunktion mit der Gleichung

$$\delta_{S\ korr} = \delta_{S\ Kardan} + x_{d\ Dynamik\ MOD}$$

$$\delta_{S\ korr} = \delta_{S} - x_{d\ Kardan\ MOD} + x_{d\ Dynamik\ MOD},$$

wobei x_d_Dynamik-MOD der modellierte dynamisch Fehler und x_d_Kardan_MOD der modellierte Kardanfehler ist.

Anhand der Ausgleichsfunktion und eines virtuellen Lenkwinkels kann eine Abweichung der kinematischen Beziehung der Winkel des Lenksystems untereinander ermittelt werden, die bei der Ermittlung des Winkelwertes des einen Winkels berücksichtigt wird.

Gemäß einer bevorzugten Ausführungsform der Erfindung wird vorgeschlagen, dass die Mittel die kinematischen Beziehung zwischen den drei Winkeln des Lenksystems als korrekt beurteilen, falls der Betrag der Abweichung kleiner als ein zulässiger Wert ist.

Vorteilhafterweise ist der zulässige Wert der Abweichung im Bereich eines Anschlags des Lenkgetriebes größer als in der Mittellage der Lenkung. In den Endlagen der Lenkung, beispielsweise im Bereich eines Zahnstangenendanschlags, weist das Lenksystem aufgrund von Verspannung eine deutlich erhöhte Abweichung auf. Damit die Abweichungen trotz der Größe nicht als unzulässig beurteilt werden, wird der zulässige Wert im Bereich der Endlagen der Lenkung erhöht. Auf diese Weise wird die Verfügbarkeit des Lenksystems erhöht.

Vorzugsweise berücksichtigen die Mittel bei der Ermittlung des Winkelwertes des einen Winkels den Kardanfehler und/oder den dynamische Fehler in Abhängigkeit von einer Fahrgeschwindigkeit des Kraftfahrzeugs. Der Kardanfehler und der dynamische Fehler werden also nicht als über den gesamten Bereich der Fahrgeschwindigkeit konstant, sondern vielmehr als abhängig von der Fahrgeschwindigkeit des Kraftfahrzeugs betrachtet. Es werden also die Auswirkungen der Fahrgeschwindigkeit auf den Kardanfehler und/oder auf den dynamischen Fehler kompensiert. Auch durch diese Maßnahme wird die Verfügbarkeit des Lenksystems erhöht.

Gemäß einer vorteilhaften Weiterbildung der Erfindung umfasst das Lenksystem einen Servoantrieb zur Momentenunterstützung. Gemäß einer bevorzugten Ausführungsform ist der Grad der Momentenunterstützung von der Fahrgeschwindigkeit des Kraftfahrzeugs abhängig ist.

Als eine weitere Lösung der Aufgabe der vorliegenden Erfindung wird ausgehend von dem Verfahren der eingangs genannten Art vorgeschlagen, dass ein Winkelwert von einem der Winkel aus der Gruppe Lenkradwinkel, Zusatzwinkel und Ritzelwinkel anhand von Winkelwerten der beiden anderen Winkel und unter Berücksichtigung der kinematischen Beziehung zwischen den drei Winkeln ermittelt wird.

Gemäß einer vorteilhaften Weiterbildung der Erfindung wird vorgeschlagen, dass der eine Winkel anhand des ermittelten Winkelwerts des einen Winkels auf Plausibilität überprüft wird.

Gemäß einer bevorzugten Ausführungsform wird vorgeschlagen, dass mindestens einer der Winkelwerte der beiden anderen Winkel, die zur Ermittlung des Winkelwerts des einen Winkels herangezogen werden, gemessen wird.

Gemäß einer weiteren bevorzugten Ausführungsform wird vorgeschlagen, dass mindestens einer der Winkelwerte der beiden anderen Winkel, die zur Ermittlung des Winkelwerts des einen Winkels herangezogen werden, anhand von anderen Größen modelliert wird.

Von besonderer Bedeutung ist die Realisierung des erfindungsgemäßen Verfahrens in der Form eines Computerprogramms. Dabei ist das Computerprogramm auf einem Rechengerät, insbesondere auf einem Mikroprozessor, ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm programmiert ist. Das Computerprogramm ist vorzugsweise auf einem Speicherelement abgespeichert. Als Speicherelement kann insbesondere ein elektrisches Speichermedium zur Anwendung kommen, beispielsweise ein Random-Access-Speicher, ein Read-Only-Speicher oder ein Flash-Speicher. Das Speicherelement kann aber auch als ein magnetisches Speichermedium (z. B. Diskette, Festplatte, Speicherband) oder optisches Speichermedium (z. B. DVD, CD-ROM, etc.) ausgebildet sein.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Figur 1  ein erfindungsgemäßes Lenksystem gemäß einer bevorzugten Ausführungsform;

Figur 2  ein Blockschaltbild einer Funktion zur Winkelüberwachung in dem Lenksystem aus Figur 1 als Bestandteil eines erfindungsgemäßen Verfahrens gemäß einer ersten bevorzugten Ausführungsform; und

Figur 3  ein Blockschaltbild einer Funktion zur Winkel überwachung in dem Lenksystem aus Figur 1 als Bestandteil eines erfindungsgemäßen Verfahrens gemäß einer zweiten bevorzugten Ausführungsform.

Beschreibung der Ausführungsbeispiele

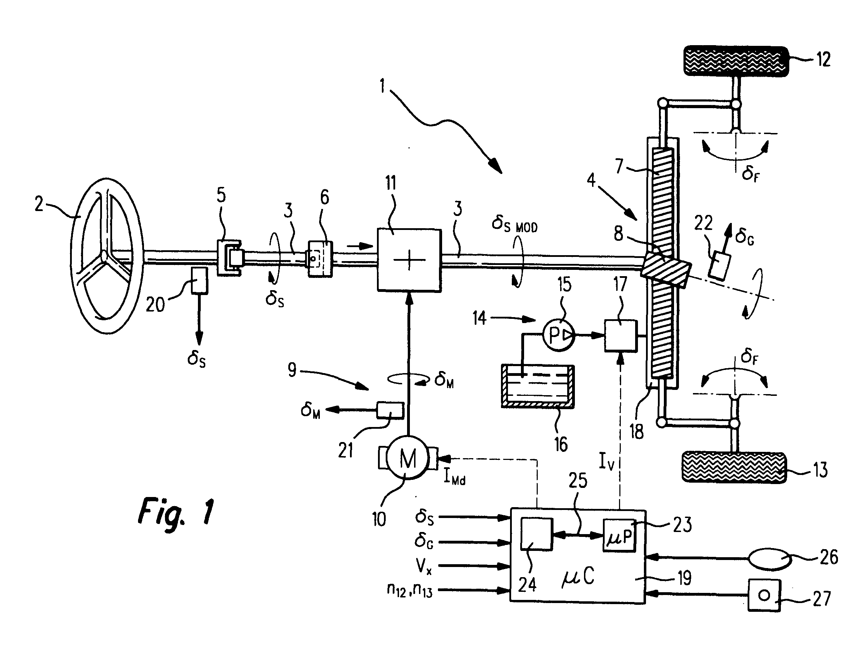

In Figur 1 ist ein erfindungsgemäßes Lenksystem eines Kraftfahrzeugs in seiner Gesamtheit mit dem Bezugszeichen 1 bezeichnet. Das Lenksystem 1 umfasst eine Lenkhandhabe 2, die beispielsweise als ein Lenkrad, als eine Lenkstange oder als Lenkknüppel ausgebildet sein kann. Die Lenkhandhabe 2 steht über eine Gelenkwelle 3 mit einem Lenkgetriebe 4 in Verbindung. Die Gelenkwelle 3 ist je nach Ausführungsform des Lenksystems 1 durch ein oder mehrere Kardangelenke 5, 6 unterbrochen. Das Lenkgetriebe 4 dient dazu, einen Drehwinkel der Gelenkwelle 3 in einen Lenkwinkel $\delta\_F$ von zu lenkenden Rädern 12, 13 des Kraftfahrzeugs umzusetzen. Das Lenkgetriebe 4 umfasst in der in Figur 1 dargestellten Ausführungsform eine Zahnstange 7 und ein Ritzel 8, an das die Gelenkwelle 3 angreift. Das Lenksystem 1 weist außerdem Überlagerungsmittel 9 auf, die einen Elektromotor 10 und ein von diesem angetriebenes Überlagerungsgetriebe 11 in Form eines Planetengetriebes umfassen.

Durch die Lenkhandhabe 2 wird ein Lenkradwinkel $\delta\_S$ als Maß für einen gewünschten Lenkwinkel $\delta\_F$ der lenkbaren Räder 12, 13 des Kraftfahrzeugs vorgegeben. Mit Hilfe des Motors 10 der Überlagerungsmittel 9 wird ein Zusatzwinkel $\delta\_M$ generiert und mittels des Überlagerungsgetriebes 11 dem Lenkradwinkel $\delta\_S$ überlagert. Der Zusatzwinkel $\delta\_M$ wird zur Verbesserung der Fahrdynamik des Kraftfahrzeugs und/ oder des Komforts generiert. Der Summenwinkel von Lenkradwinkel $\delta$_S und Zusatzwinkel $\delta$_M wird als Ritzelwinkel $\delta$_G bezeichnet.

Im Bereich des Lenkgetriebes 4 ist ein Servoantrieb 14 angeordnet, der zur Momentenunterstützung dient. Der Servoantrieb 14 umfasst eine Hydraulikpumpe 15, die eine Hydraulikflüssigkeit aus einem Vorratsbehälter 16 über ein Hydraulikventil 17 in das Lenkgetriebe 4 fördert. Genauer gesagt, sind die Lenkstange 7 und das Ritzel 8 in einem Gehäuse 18 des Lenkgetriebes 4 angeordnet. Das Hydraulikventil 17 ist elektromagnetisch oder über einen Piezoaktor betätigbar. In der Regel umfasst ein Servoantrieb 14 mehrere Hydraulikventile 17, von denen in Figur 1 aber nur eines dargestellt ist. Über das Hydraulikventil 17 wird der Fluss der Hydraulikflüssigkeit an das eine oder das andere Ende der Lenkstange 7 gesteuert, und so eine Momentenunterstützung in die eine oder andere Richtung bewirkt. Über die Menge und damit den Druck der in das Gehäuse 18 des Lenkgetriebes 4 geförderten Hydraulikflüssigkeit kann die Stärke der Momentenunterstützung variiert werden. Statt des dargestellten hydraulischen Servoantriebs 14 kann auch ein elektrischer Servoantrieb vorgesehen werden.

Das Lenksystem 1 verfügt außerdem über ein Steuergerät 19, das unter anderem zur Ansteuerung des Motors 10 der Überlagerungsmittel 9 und des Hydraulikventils 17 des Servoantriebs 14 dient. Dazu wird der Motor 10 mit einem Ansteuersignal I_Md und das Hydraulikventil mit einem Ansteuersignal I_V beaufschlagt. In dem vorliegenden Ausführungsbeispiel wird das Hydraulikventil 17 derart angesteuert, dass sich in Abhängigkeit von der Fahrgeschwindigkeit V_x des Kraftfahrzeugs eine variable Momentenunterstützung eingestellt. So ist es beispielsweise möglich, bei niedrigen Fahrgeschwindigkeiten V_x eine hohe Momentenunterstützung zu wählen, um das Rangieren des Fahrzeugs zu erleichtern, und bei hohen Geschwindigkeiten V_x (z. B. bei zügiger Überland- oder Autobahnfahrt) eine niedrige Momentenunterstützung einzustellen, um eine fahrdynamisch besonders stabile Lenkung des Fahrzeugs zu ermöglichen.

Um die genannten Steuerungsfunktionen ausführen zu können, liegt an dem Steuergerät 19 ein Geschwindigkeitssignal V_x an. Außerdem verfügt das Lenksystem 1 über geeignete Drehwinkelsensoren 20, 21, 22, welche den Lenkradwinkel $\delta$_S, den Zusatzwinkel $\delta$_M und den Ritzelwinkel $\delta$_G messen. Die Drehwinkelsignale $\delta$_S, $\delta$_M und $\delta$_G werden ebenfalls an das Steuergerät 19 geführt. Erfindungsgemäß wird die kinematische Beziehung der Winkel $\delta$_S, $\delta$_M und $\delta$_G herangezogen, um zur Erhöhung der Sicherheit und Verfügbarkeit des Lenksystems 1 die Richtigkeit von einem der Drehwinkelsignale $\delta$_S, $\delta$_M und $\delta$_G zu überwachen oder um zur Einsparung von einem der Sensoren 20, 21, 22 aus zwei der Drehwinkelsignale das dritte zu ermitteln. Zur Erhöhung der Genauigkeit der kinematischen Beziehung zwischen den Winkeln $\delta$_S, $\delta$_M und

$\delta$_G werden erfindungsgemäß auch mechanische und dynamische Fehler des Lenksystems 1 berücksichtigt. Statt - wie in Figur 1 dargestellt - die für das erfindungsgemäße Verfahren herangezogenen Drehwinkelsignale $\delta$_S, $\delta$_M und $\delta$_G zu messen, kann zumindest eines der Signale $\delta$_S, $\delta$_M und $\delta$_G auch aus anderen in dem Lenksystem 1 bzw. in dem Kraftfahrzeug zur Verfügung stehenden Signalen modelliert werden.

Aufgabe des erfindungsgemäßen Verfahrens ist es, die kinematische Beziehung zwischen den drei Größen Lenkradwinkel $\delta$_S, Zusatzwinkel $\delta$_M und Ritzelwinkel $\delta$_G zu überwachen. Da das Lenksystem 1 kein Starrkörpersystem darstellt, muss zusätzlich zur statischen Betrachtung der Beziehung das dynamische Verhalten zwischen den drei Winkeln $\delta$_S, $\delta$_M und $\delta$_G berücksichtigt werden. Darüber hinaus wird der durch die zwischen der Lenkhandhabe 2 und dem Ritzel 8 sitzende Gelenkwelle 3 hervorgerufene Kardanfehler berücksichtigt. Dabei wird ein masseloses Kardangelenk 5 oder 6 betrachtet, welches zwei Teile der Gelenkwelle 3 windschief miteinander verbindet. Da der räumliche Knickwinkel der Kardangelenke 5 oder 6 in jedem Fahrzeugtyp variiert, muss das erfindungsgemäße Verfahren für jeden Fahrzeugtyp entsprechend angepasst werden.

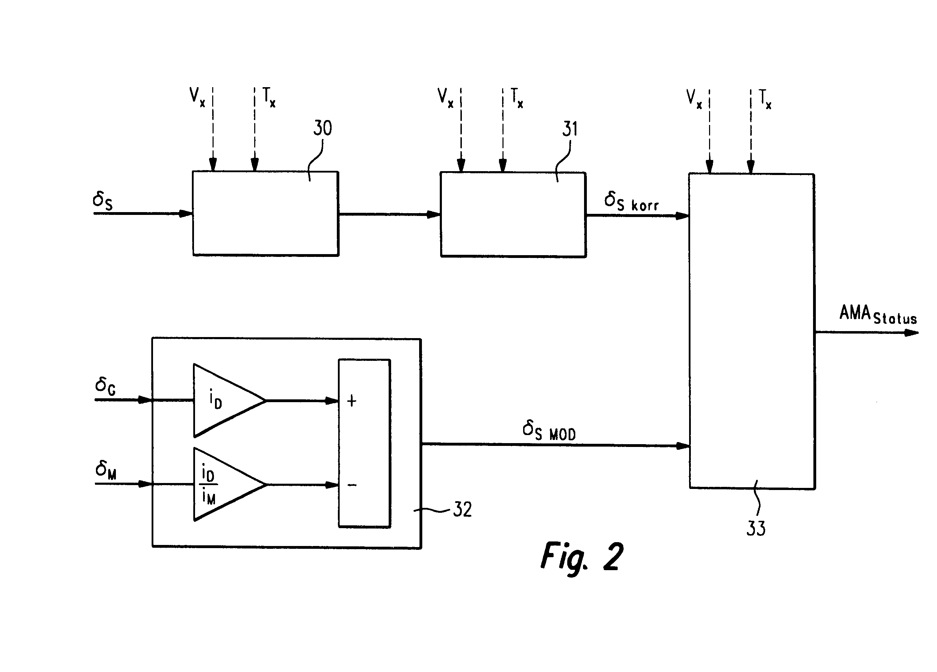

Anhand der Figur 2 wird ein erstes bevorzugtes Ausführungsbeispiel des erfindungsgemäßen Verfahrens näher erläutert. Dabei wird ausgehend von der Annahme, dass zwei der drei Winkel $\delta$_S, $\delta$_M und $\delta$_G richtig sind, der dritte Winkel überwacht und plausibilisiert. In Figur 2 sind links die Funktionseingänge und rechts die Funktionsausgänge dargestellt. Der Lenkradwinkel $\delta$_S wird über einen ersten Funktionsblock 30 zur Kompensation des Kardanfehlers und einen zweiten Funktionsblock 31 zur dynamischen Korrektur des Lenkradwinkels geführt. Als Ausgang dieser beiden Funktionsblöcke 30, 31 ergibt sich der korrigierte Lenkradwinkel $\delta$_S_korr. Der Zusatzwinkel $\delta$_M und der Ritzelwinkel $\delta$_G werden einem kinematischem Modell 32 des Lenksystems 1 zugeführt. Dort wird der Ritzelwinkel $\delta$_G mit dem Übersetzungsverhältnis i_D zwischen Lenkradwinkel $\delta$_S und Ritzelwinkel $\delta$_G beaufschlagt. Der Zusatzwinkel $\delta$_M wird mit dem Quotienten der Übersetzungsverhältnisse i_D/i_M beaufschlagt, wobei i_M das Übersetzungsverhältnis zwischen dem Zusatzwinkel $\delta$_M und dem Ritzelwinkel $\delta$_G ist. Ein virtueller Lenkradwinkel $\delta$_S_MOD ergibt sich aus der Differenz des Produkts aus Ritzelwinkel $\delta$_G und Übersetzungsverhältnis i_D und des Produkts aus Zusatzwinkel $\delta$_M und dem Quotient der Übersetzungsverhältnisse i_D und i_M. Das entspricht der Gleichung $\delta$_S_MOD = $\delta$_G · i_D - $\delta$_M · i_D/i_M. In einem dritten Funktionsblock 33 wird der korrigierte Lenkradwinkel $\delta$_S_korr mit dem virtueller Lenkradwinkel $\delta$_S_MOD verglichen und in Abhängigkeit von dem Ergebnis des Vergleichs ein Statussignal AMA_Status ausgegeben.

Grundlage des erfindungsgemäßen Verfahrens ist die kinematische Positionsbeziehung:

$$\delta_G = \frac{1}{i_M} \cdot \delta_M + \frac{1}{i_D} \cdot \delta_S \qquad (1)$$

Stellt man Gleichung (1) nach δ_S um, erhält man die kinematische Beziehung, aus welcher der virtuelle Lenkradwinkel δ_S_MOD berechnet werden kann:

$$\delta_{S\,MOD} = i_D \cdot \delta_G - \frac{i_D}{i_M} \cdot \delta_M \qquad (2)$$

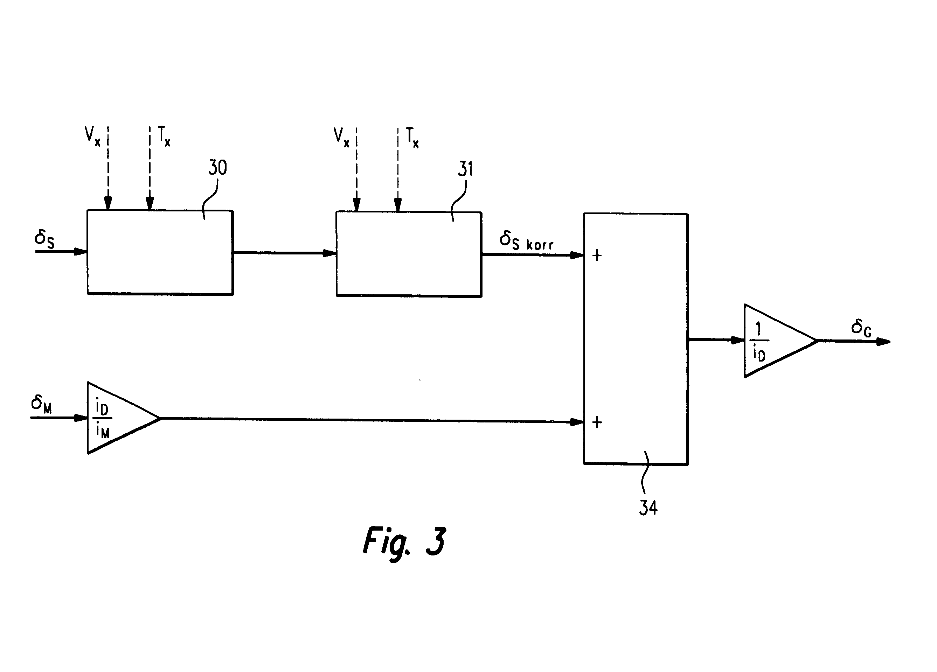

In Figur 3 ist ein weiteres Ausführungsbeispiel des erfindungsgemäßen Verfahrens dargestellt. Dabei wird ausgehend von der Annahme, dass zwei der drei Winkel δ_S, δ_M richtig sind, der dritte Winkel δ_G ermittelt. Dadurch kann der Sensor 22 zur Messung des Ritzelwinkels δ_G eingespart werden. In Figur 3 sind links die Funktionseingänge und rechts die Funktionsausgänge dargestellt. Der Lenkradwinkel δ_S wird über den ersten Funktionsblock 30 zur Kompensation des Kardanfehlers und den zweiten Funktionsblock 31 zur dynamischen Korrektur des Lenkradwinkels geführt. Als Ausgang dieser beiden Funktionsblöcke 30, 31 ergibt sich der korrigierte Lenkradwinkel δ_S_korr. Der Zusatzwinkel δ_M wird mit dem Quotienten der Übersetzungsverhältnisse i_D/i_M beaufschlagt. In einem weiteren Funktionsblock 34 werden der korrigierte Lenkradwinkel δ_S_korr und das Produkt aus Zusatzwinkel δ_M und dem Quotienten der Übersetzungsverhältnisse i_D/i_M addiert. Die Ausgangsgröße des Funktionsblocks 34 wird mit dem Kehrwert des Übersetzungsverhältnisses i_D beaufschlagt. Als Ausgangsgröße ergibt sich dann der Ritzelwinkel δ_G. Für den Ritzelwinkel δ_G ergibt sich somit die Gleichung δ_G = 1/i_D · (δ_S_korr + δ_M · i_D/i_M).

Das erfindungsgemäße Verfahren ist vorzugsweise in Form eines Computerprogramms realisiert, das auf einem Rechengerät 23, insbesondere auf einem Mikroprozessor, des Steuergeräts 19 des Lenksystems 1 ablaufen kann. Das Computerprogramm ist auf einem Speicherelement, insbesondere auf einem elektrischen Speicherelement 24 in Form eines Read-Only-Speichers, Random-Access-Speichers oder Flash-Speichers, abgespeichert. Zur Ausführung des Computerprogramms auf dem Rechengerät 23, wird das Computerprogramm abschnittsweise oder als ganzes über eine Datenverbindung 25 von dem Speicherelement 24 zu dem Rechengerät 23 übertragen. Durch die Abarbeitung des Computerprogramms auf dem Rechengerät 23 wird das erfindungsgemäße Verfahren ausgeführt. Während der Ausführung des Computerprogramms ermittelte oder empfangene Werte können über die Datenverbindung 25 an das Speicherelement 24 übertragen und dort abgespeichert werden.

Das Computerprogramm kann aus dem Internet 26 heruntergeladen und in dem Speicherelement 24 des Steuergeräts 19 abgelegt werden. Alternativ kann das Computerprogramm auch auf einem Speicherelement 27, insbesondere auf einem elektrischen Datenträger (SD-Karte, CF-Karte, etc.), einem magnetischen Datenträger (Diskette, Festplatte, Speicherband, etc.) oder einem optischen Datenträger (CD-ROM, DVD, etc.), abgespeichert sein. Der Inhalt des Datenträgers 27 kann in das Steuergerät 19 eingelesen und in dem Speicherelement 24 des Steuergeräts 19 abgelegt werden.

Bei den beschriebenen Ausführungsbeispielen wird der Kardanfehler x_d_Kardan und der von der Lenkradwinkelgeschwindigkeit $\dot{\delta}_s$ abhängige dynamische Fehler unabhängig von der Fahrzeuggeschwindigkeit V_x ermittelt und entsprechend berücksichtigt. Es ist jedoch vorteilhaft, wenn Kardanfehler x_d_Kardan und der von der Lenkradwinkelgeschwindigkeit $\dot{\delta}_s$ abhängige dynamische Fehler abhängig von der Fahrzeuggeschwindigkeit V_x ermittelt werden. Zu diesem Zweck wird die Fahrzeuggeschwindigkeit V_x als Eingangssignal an die Funktionsblöcke 30, 31 und 33 in den Figuren 2 und 3 herangeführt und dort entsprechend berücksichtigt. Es werden also die Auswirkungen der Fahrgeschwindigkeit V_x auf den Kardanfehler x_d_Kardan und auf den dynamischen Fehler kompensiert. Durch diese Maßnahme kann die Verfügbarkeit des Lenksystems 1 erhöht werden.

**Patentansprüche**

1. Lenksystem (1) eines Kraftfahrzeugs, mit einer Lenkhandhabe (2) zur Vorgabe eines Lenkradwinkels (δ_S) als Maß für einen gewünschten Lenkwinkel (δ_F) für mindestens ein lenkbares Rad (12, 13) des Kraftfahrzeugs, mit Überlagerungsmitteln (9) zum Generieren eines Zusatzwinkels (δ_M) und zur Überlagerung des Lenkradwinkels (δ_S) mit dem Zusatzwinkel (δ_M), so dass sich ein Ritzelwinkel (δ_G) ergibt, und mit einem Lenkgetriebe (4) zur Umsetzung des Ritzelwinkels (δ_G) in einen Lenkwinkel (δ_F) für das mindestens eine lenkbare Rad (12, 13) des Kraftfahrzeugs, **dadurch gekennzeichnet, dass** das Lenksystem (1) Mittel (19) zur Ermittlung eines Winkelwertes von einem der Winkel (δ_S; δ_M; δ_G) aus der Gruppe Lenkradwinkel (δ_S), Zusatzwinkel (δ_M) und Ritzelwinkel (δ_G) anhand von Winkelwerten der beiden anderen Winkel (δ_M, δ_G; δ_S, δ_G; δ_S, δ_M) und unter Berücksichtigung der kinematischen Beziehung zwischen den drei Winkeln (δ_S, δ_M, δ_G) aufweist.

2. Lenksystem (1) nach Anspruch 1, **dadurch gekennzeichnet, dass** das Lenksystem (1) Mittel (19) zur Plausibilitätsprüfung des einen Winkels (δ_S; δ_M; δ_G) anhand des von den Mitteln (19) ermittelten Winkelwerts des einen Winkels (δ_S; δ_M; δ_G) aufweist.

3. Lenksystem (1) nach Anspruch 1 oder 2, **dadurch gekennzeichnet, dass** das Lenksystem (1) Mittel (20, 21, 22) zum Messen der Winkelwerte der beiden anderen Winkel ($\delta\_M$, $\delta\_G$; $\delta\_S$, $\delta\_G$; $\delta\_S$, $\delta\_M$) aufweist.

4. Lenksystem (1) nach einem der Ansprüche 1 bis 3, **dadurch gekennzeichnet, dass** das Lenksystem (1) Mittel (19) zum Modellieren der Winkelwerte der beiden anderen Winkel ($\delta\_M$, $\delta\_G$; $\delta\_S$, $\delta\_G$; $\delta\_S$, $\delta\_M$) anhand von anderen Größen aufweist.

5. Lenksystem (1) nach einem der Ansprüche 1 bis 4, **dadurch gekennzeichnet, dass** die Mittel (29) bei der Ermittlung des Winkelwertes des einen Winkels ($\delta\_S$; $\delta\_M$; $\delta\_G$) einen Kardanfehler (x_d_Kardan) einer zwischen der Lenkhandhabe (2) und dem Lenkgetriebe (4) angeordneten Gelenkwelle (3) oder eine den Kardanfehler (x_d_Kardan) charakterisierende Größe berücksichtigen.

6. Lenksystem (1) nach Anspruch 5, **dadurch gekennzeichnet, dass** das Lenksystem (1) Mittel (19) zur Ermittlung des Kardanfehlers (x_d_Kardan) anhand einer analytischen Gleichung aufweist.

7. Lenksystem (1) nach Anspruch 5, **dadurch gekennzeichnet, dass** das Lenksystem (1) Mittel (19) zur Modellierung des Kardanfehlers (x_d_Kardan) anhand einer trigonometrischen Funktion aufweist.

8. Lenksystem (1) nach Anspruch 7, **dadurch gekennzeichnet, dass** das Lenksystem (1) Mittel (19) zur Modellierung des Kardanfehlers (x_d_Kardan) anhand einer Cosinus-Funktion aufweist.

9. Lenksystem (1) nach einem der Ansprüche 1 bis 8, **dadurch gekennzeichnet, dass** die Mittel (19) bei der Ermittlung des Winkelwertes des einen Winkels ($\delta\_S$; $\delta\_M$; $\delta\_G$) einen von der Lenkradwinkelgeschwindigkeit ($\dot{\delta}_s$) oder von einer diese charakterisierenden Größe abhängigen dynamischen Fehler (x_d_Dynamik) berücksichtigen.

10. Lenksystem (1) nach Anspruch 9, **dadurch gekennzeichnet, dass** das Lenksystem (1) Mittel (19) zur Modellierung des dynamischen Fehlers (x_d_Dynamik_MOD) anhand einer Differentialgleichung aufweist.

11. Lenksystem (1) nach einem der Ansprüche 1 bis 10, **dadurch gekennzeichnet, dass** die Mittel (19) bei der Ermittlung des Winkelwertes des einen Winkels ($\delta\_S$; $\delta\_M$; $\delta\_G$) eine Ausgleichsfunktion ($\delta_{S\ korr}$) berücksichtigen, mit der Gleichung

$$\delta_{S\ korr} = \delta_{S\ Kardan} + x_{d\ Dynamik\ MOD}$$

$$\delta_{S\ korr} = \delta_S - x_{d\ Kardan\ MOD} + x_{d\ Dynamik\ MOD},$$

wobei x_d_Dynamik_MOD der modellierte dynamisch Fehler (x_d_Dynamik) und x_d_Kardan_MOD der modellierte Kardanfehler (x_d_Kardan) ist.

12. Lenksystem (1) nach Anspruch 11, **dadurch gekennzeichnet, dass** die Mittel (19) die kinematischen Beziehung zwischen den drei Winkeln ($\delta\_S$, $\delta\_M$, $\delta\_G$) als korrekt beurteilen, falls der Betrag der Abweichung ($\Delta_{AMA}$) kleiner als ein zulässiger Wert ($\Delta_{AMA\ max}$) ist.

13. Lenksystem (1) nach Anspruch 12, **dadurch gekennzeichnet, dass** der zulässige Wert ($\Delta_{AMA\ max}$) der Abweichung ($\Delta_{AMA}$) im Bereich eines Anschlags des Lenkgetriebes (4) größer ist als in der Mittellage der Lenkung.

14. Lenksystem (1) nach einem der Ansprüche 5 bis 13, **dadurch gekennzeichnet, dass** die Mittel (19) bei der Ermittlung des Winkelwertes des einen Winkels ($\delta\_S$; $\delta\_M$; $\delta\_G$) den Kardanfehler (x_d_Kardan) und/ oder den dynamische Fehler (x_d_Dynamik) in Abhängigkeit von einer Fahrgeschwindigkeit (V_x) des Kraftfahrzeugs berücksichtigen.

15. Lenksystem (1) nach einem der Ansprüche 1 bis 14, **dadurch gekennzeichnet, dass** das Lenksystem (1) einen Servoantrieb (14) zur Momentenunterstützung umfasst.

16. Lenksystem (1) nach Anspruch 15, **dadurch gekennzeichnet, dass** der Grad der Momentenunterstützung von der Fahrgeschwindigkeit (V_x) des Kraftfahrzeugs abhängig ist.

17. Verfahren zum Betrieb eines Lenksystems (1) eines Kraftfahrzeugs, bei dem mittels einer Lenkhandhabe (2) ein Lenkradwinkel ($\delta\_S$) als Maß für einen gewünschten Lenkwinkel ($\delta\_F$) für mindestens ein lenkbares Rad (12, 13) des Kraftfahrzeugs vorgegeben wird, bei dem ein Zusatzwinkel ($\delta\_M$) generiert und zur Ermittlung eines Ritzelwinkels ($\delta\_G$) dem Lenkradwinkel ($\delta\_S$) überlagert wird, und bei dem der Ritzelwinkel ($\delta\_G$) in einen Lenkwinkel ($\delta\_F$) für das mindestens eine lenkbare Rad (12, 13) des Kraftfahrzeugs umgesetzt wird, **dadurch gekennzeichnet, dass** ein Winkelwert von einem der Winkel ($\delta\_S$; $\delta\_M$; $\delta\_G$) aus der Gruppe Lenkradwinkel ($\delta\_S$), Zusatzwinkel ($\delta\_M$) und Ritzelwinkel ($\delta\_G$) anhand von Winkelwerten der beiden anderen Winkel ($\delta\_M$, $\delta\_G$; $\delta\_S$, $\delta\_G$; $\delta\_S$, $\delta\_M$) und unter Berücksichtigung der kinematischen Beziehung zwischen den drei Winkeln ($\delta\_S$, $\delta\_M$, $\delta\_G$) ermittelt wird.

**18.** Verfahren nach Anspruch 17, **dadurch gekennzeichnet, dass** der eine Winkel ($\delta$_S; $\delta$_M; $\delta$_G) anhand des ermittelten Winkelwerts des einen Winkels ($\delta$_S; $\delta$_M; $\delta$_G) auf Plausibilität überprüft wird.

**19.** Verfahren nach Anspruch 17 oder 18, **dadurch gekennzeichnet, dass** mindestens einer der Winkelwerte der beiden anderen Winkel ($\delta$_M, $\delta$_G; $\delta$_S, $\delta$_G; $\delta$_S, $\delta$_M), die zur Ermittlung des Winkelwerts des einen Winkels ($\delta$_S; $\delta$_M; $\delta$_G) herangezogen werden, gemessen wird.

**20.** Verfahren nach einem der Ansprüche 17 bis 19, **dadurch gekennzeichnet, dass** mindestens einer der Winkelwerte der beiden anderen Winkel ($\delta$_M, $\delta$_G; $\delta$_S, $\delta$_G; $\delta$_S, $\delta$_M), die zur Ermittlung des Winkelwerts des einen Winkels ($\delta$_S; $\delta$_M; $\delta$_G) herangezogen werden, anhand von anderen Größen modelliert wird.

**21.** Computerprogramm, das auf einem Rechengerät, insbesondere auf einem Mikroprozessor, eines Steuergeräts (19) für ein Lenksystem (1) eines Kraftfahrzeugs ablauffähig ist, **dadurch gekennzeichnet, dass** das Computerprogramm zur Ausführung eines Verfahrens nach einem der Ansprüche 17 bis 20 programmiert ist.

**22.** Computerprogramm nach Anspruch 21, **dadurch gekennzeichnet, dass** das Computerprogramm auf einem Speicherelement abgespeichert ist.

Fig. 1

Fig. 2

*Fig. 3*